# EUROPEAN PATENT APPLICATION

(11) **EP 4 818 947 A1**
(43) Date of publication of application: **07.10.2026**
(21) Application number: 25167321.6
(22) Date of filing: 31.03.2025
(51) Int. Cl.: G06F 21/57, H04L 9/40

(54) **METHOD FOR IMPROVING PATCHING OF SOFTWARE SYSTEMS**

(71) Applicant: Siemens Aktiengesellschaft, 80333 München (DE)
(72) Inventor: Lorenz, Johannes, 83059 Kolbermoor (DE); Lukas, Klaus, 81739 München (DE)
(74) Representative: Siemens Patent Attorneys

(57) **Abstract**

The present disclosure provides a method for improving patching of a software system. Patching information is considered and patching process information about a patching process is derived. The patching process information is subjected to analysis for vulnerabilities induced by the patching process. Based on the identified vulnerabilities, action requests for requesting actions to mitigate the vulnerabilities are generated and submitted to the software system. The method enables efficient identification and mitigation of potential security risks introduced during software patching.

## Description

The invention relates to software vulnerability management, and more particularly to a method for improving patching of software systems by analyzing and addressing residual risks associated with vulnerability patches.

Software systems are increasingly complex and interconnected, leading to a growing number of vulnerabilities that need to be addressed. As software components and dependencies multiply, the task of managing and patching these vulnerabilities becomes more challenging. Organizations must constantly monitor for new security threats and apply patches to maintain the integrity and security of their systems.

The process of patching software systems involves identifying vulnerabilities, obtaining appropriate patches, and applying them to affected systems. However, this process is not always straightforward. Patches may introduce new issues or conflicts with existing software components. Additionally, some vulnerabilities may require more than just a simple patch application, such as configuration changes or additional security measures.

The sheer volume of vulnerabilities being discovered and reported presents a significant challenge for IT teams. Manual analysis and patching of each vulnerability is time-consuming and often impractical, especially for large-scale systems. This has led to the adoption of automated patching strategies, such as applying all available patches or updating to the latest stable version of software components.

While automated patching strategies can help address many vulnerabilities quickly, they may not account for all the nuances and potential risks associated with each patch. Some vulnerabilities require additional actions beyond simply applying a patch, such as reconfiguring systems, updating encryption keys, or implementing compensating controls. Failure to address these additional requirements can leave systems exposed to residual risks.

Furthermore, not all vulnerabilities can be resolved through patching alone. Some may require the removal or replacement of software components, implementation of network segmentation, or other mitigation strategies. Identifying and addressing these cases requires careful analysis and consideration of the specific context in which the software operates.

Balancing the need for rapid patch deployment with thorough risk assessment and mitigation is a persistent challenge in software vulnerability management. Organizations must find ways to efficiently handle the increasing volume of vulnerabilities while ensuring that all necessary actions are taken to fully address potential security risks.

It has been appreciated that a method is needed that overcomes one or more of these problems.

It is therefore the object of the present invention to provide a method for improving patching of software systems that overcomes one or more of these problems.

This object of the present invention is solved with a method for improving patching of software systems with the features contained in claim 1.

Advantageous aspects of the invention are contained in the subsequent dependent claims, the following description and the drawing.

The method for improving patching of a software system according to the invention includes considering security information of a patch latest stable or patch all implementation or in the context of a patch lastest stable or patch all implementation and subjecting the security information to analysis for mitigation measures, where additional mitigation actions are determined and submitted to the software system.

Preferably, the security information is patching information about the patching process preformed according to the patch lastest stable or patch all implementation.

Preferably, the analysis considers vulnerabilities induced by the patching process, and based on the vulnerabilities, the mitigation actions are determined and submitted to the software system.

This method allows for efficient automated patching while addressing potential risks and vulnerabilities that may arise from the patching process, such as the patch latest stable or patch all implementation itself. By analyzing the security information, such as a patching process information, the method can identify and mitigate vulnerabilities that might otherwise be overlooked in a simple patch-all strategy.

In a preferable and advantageous aspect of the method according to the invention, the security information includes a lifecycle information, particularly end-of-life or end-of support information, preferably of the software system, preferably of the patch latest stable or patch all implementation. In particular, the security information includes a lifecycle information of a patch, that is implemented according to the patch latest stable or patch all implementation.

In another advantageous aspect of the method according to the invention, the method is computer-implemented.

Implementing the method via computer automation enables rapid processing of large volumes of patching information and vulnerability analyses, significantly reducing the time and resources required for manual review.

In another advantageous aspect of the method according to the invention, no action requests are deemed necessary.

This aspect allows for scenarios where the analysis determines that the patching process does not introduce any significant vulnerabilities, thus streamlining the patching process without unnecessary additional actions.

In another advantageous aspect of the method according to the invention, the actions involve modifications of the software system, particularly additional patches.

By allowing for additional patches or modifications, the method can address complex vulnerabilities that may require more than just the initial patch, ensuring a more comprehensive security approach.

In another advantageous aspect of the method according to the invention, the actions involve additional configuration.

This aspect enables the method to address vulnerabilities that may arise from improper system configurations after patching, ensuring that the software system remains secure and properly configured.

In another advantageous aspect of the method according to the invention, the actions involve removal of components of the software system.

The ability to remove vulnerable components provides an additional layer of security, allowing for the elimination of potential security risks that cannot be adequately addressed through patching or configuration changes.

In another advantageous aspect of the method according to the invention, the actions involve replacement of components of the software system.

Replacing vulnerable components with more secure alternatives can significantly enhance the overall security posture of the software system, addressing vulnerabilities that cannot be mitigated through patching alone.

In another advantageous aspect of the method according to the invention, the actions involve limiting communication privileges of the communication system, particularly a separation from a communication network and/or implementing IDS-/firewall policies.

This aspect allows for network-level mitigation strategies, providing an additional layer of protection against vulnerabilities that may be exploited through network communications.

In another advantageous aspect of the method according to the invention, the software system is an industrial control system and/or a software system of an industrial site, particularly a manufacturing site.

Applying this method to industrial control systems and manufacturing sites addresses the unique security challenges faced in these critical environments, where system downtime and vulnerabilities can have severe consequences.

In another advantageous aspect of the method according to the invention, the system software system is a software system implemented on an industrial device, particularly a manufacturing and/or logistics device.

This aspect extends the method's applicability to specific industrial devices, ensuring that critical manufacturing and logistics equipment remains secure and operational throughout the patching process.

In another advantageous aspect of the method according to the invention, the analysis is rule-based.

A rule-based analysis approach allows for consistent and predictable vulnerability assessments, which can be easily updated and maintained as new types of vulnerabilities are discovered.

In another advantageous aspect of the method according to the invention, the analysis uses a machine learning and/or artificial intelligence system, particularly a neural network.

Employing a neural network for analysis enables the method to adapt to complex and evolving vulnerability patterns, potentially identifying subtle risks that might be missed by traditional rule-based systems.

In another advantageous aspect of the method according to the invention, the action requests comprise an automatable form.

Providing action requests in an automatable form facilitates seamless integration with existing patch management systems, allowing for efficient implementation of necessary actions to mitigate vulnerabilities.

In the following, the invention is described in more details with the help of the attached drawing.

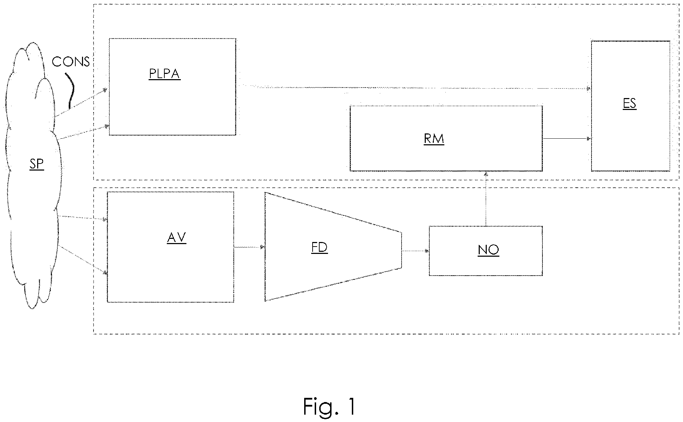

Fig. 1 illustrates a block diagram of a system for improving patching of software systems, according to aspects of the present disclosure.

FIG. 1 illustrates a block diagram of a system implementing this method. The system comprises several components that work together to analyze vulnerability information and provide notifications for dependent risks and actions. The depicted components are configured to carry out steps of the method according to the invention.

The method begins with obtaining patching information in a consideration step CONS from vulnerability information sources and patch sources SP. This information is then processed through two parallel paths. The upper path describes the processes at the operator of a software system. The lower path shows how vulnerabilities action requests for requesting actions to mitigate vulnerabilities associated with a patching strategy by the operator are generated using the method according to the invention. In the upper path, a patch latest stable or patch all implementation PLPA is carried out, that uses the patching information. The patch latest stable or patch all implementation PLPA applies patches to the software system, which in the depicted embodiment is an industrial control system. In other embodiments, which, apart from this detail, are identical, the software system is the software system of an industrial site. This software system may be implemented on an industrial device, such as a manufacturing or logistics device.

In the lower path, a step AV processes the patching information and analyzes the contained vulnerability information to get information on dependent risks and actions with the help of a risk and actions module. To do so, the risk and actions module derives patching process information and subjects it to analysis for vulnerabilities that may be induced by the patching process. This analysis is particularly important for complex environments such as software containers or cloud environments.

Based on the vulnerabilities identified by the risk and actions module, a filter module filters in a step FD information on dependent risks and actions to generate action requests. These action requests are designed to mitigate the identified vulnerabilities. The Filter module passes these action requests to a notify module, which - in a step NO - submits the action requests to the software system.

An action module RM executes the action requests, namely the requested dependent actions and mitigates dependent risks received due to the step NO. The action module RM implements the requested actions to address the vulnerabilities identified in the analysis AV. These actions may involve additional patches, configuration changes, or other mitigation strategies specific to the software system and its environment.

Concerning the upper path as shown in Fig. 1, the action module RM operates in a secure execution environment established in step ES with the help of a security module. The step ES ensures that both the patching and the execution of the patched and mitigated software system operates in a secure manner. The security module may implement additional security measures or verify the effectiveness of the applied patches and mitigations.

By combining automated patch implementation with targeted analysis and notification of dependent risks and actions, this method provides a comprehensive approach to improving the patching process for software systems, particularly in industrial and complex computing environments.

The system analyzes vulnerability and patch information in the step AV using the risk and actions module. This step AV is carried out as a computer-implemented software method step and processes the patching information obtained from vulnerability information sources and patch sources SP. The step AV subjects the patching process information to analysis for vulnerabilities that may be induced by the patching process.

The step AV employs various analysis techniques. In one embodiment, the step AV uses a rule-based approach to identify potential vulnerabilities and associated risks. In another embodiment, the step AV utilizes a neural network to perform the analysis, allowing for more complex pattern recognition in the vulnerability data.

After the analysis, the information is passed to the filter module. The filter module carrying out the step FD categorizes the analyzed information into specific categories:
1. Patches that can be applied without further actions
2. Cases where implementation changes are required
3. Situations requiring additional actions
4. End of Life notifications
5. Instances where component removal is required
6. Cases where no patch is available.

The step FD ensures that only relevant information is passed on for further processing. In some cases, the analysis may result in no action requests being deemed necessary, which is also captured by the step FD.

Based on the filtered information, the notify module generates and submits in step NO action requests to the software system. For this, the notify module creates notifications that include specific details about the required actions or risk-addressing information. These notifications are designed to provide clear guidance on how to address the identified vulnerabilities and associated risks.

The system, through this detailed process of vulnerability analysis and action request generation, ensures that all potential risks and necessary actions are identified and communicated effectively, contributing to the overall security of the software system.

The method for improving patching of software systems implements patching strategies to address vulnerabilities efficiently

The execute dependent actions and mitigate dependent risks RM module performs several functions to address potential vulnerabilities:
1. The actions module RM implements additional configuration changes as needed. These configuration changes may involve adjusting system settings or parameters to enhance security.
2. The actions module RM applies modifications to the software system, including additional patches that may be required beyond those applied in the patch latest stable or patch all implementation PLPA.
3. The action module RM replaces components of the software system when necessary. This replacement may occur when a component is identified as vulnerable and a secure alternative is available.
4. The action module RM removes components of the software system that are identified as security risks and cannot be adequately patched or replaced.
5. The action module RM implements measures to limit communication privileges of the communication system. These measures may include network segmentation or the implementation of stricter firewall rules to reduce potential attack surfaces.

The step ES ensures that the patched and mitigated software system operates in a secure manner. The step ES verifies the effectiveness of the applied patches and mitigation strategies implemented by the action module RM.

By combining automated patching strategies with targeted analysis and mitigation of dependent risks, this method provides a comprehensive approach to improving the security of software systems, particularly in complex computing environments.

The analyses according to steps AV and FD are either carried out rule-based and/or using a neural network.

## Claims

1. Method for improving patching of a software system, wherein security information is considered (CONS) of, or in the context of, a patch latest stable or patch all implementation (PLPA) and subjected to analysis (AV) for mitigation measures, where additional mitigation actions are determined (FD) and submitted (NO) to the software system.

2. Method according to the previous claim, which is computer-implemented.

3. Method according to one of the previous claims, wherein the security information is a lifecycle information, particularly end-of-life and/or end-of support information, preferably of the patch latest stable or patch all implementation.

4. Method according to one of the previous claims, wherein no action requests are deemed necessary.

5. Method according to one of the previous claims, wherein the actions involve modifications of the software system, particularly additional patches.

6. Method according to one of the previous claims, wherein the actions involve additional configuration, particularly

7. Method according to one of the previous claims, wherein the actions involve removal of components of the software system.

8. Method according to one of the previous claims, wherein the actions involve replacement of components of the software system.

9. Method according to one of the previous claims, wherein the actions involve limiting communication privileges of the communication system, particularly a separation from a communication network and/or implementing IDS-/firewall policies.

10. Method according to one of the previous claims, wherein the software system is an industrial control system and/or a software system of an industrial site, particularly a manufacturing site.

11. Method according to one of the previous claims, wherein the system software system is a software system implemented on an industrial device, particularly a manufacturing and/or logistics device.

12. Method according to one of the previous claims, wherein the analysis is rule-based.

13. Method according to one of the previous claims, wherein the analysis uses a machine learning and/or artificial intelligence system.

14. Method according to one of the previous claims, wherein the action requests comprise an automatable form.
